# EUROPEAN PATENT SPECIFICATION

(11) **EP 1 360 053 B1**
(45) Date of publication and mention of the grant of the patent: **01.06.2005**
(21) Application number: 02716163.7
(22) Date of filing: 25.01.2002
(51) Int. Cl.: B29C 44/14

(54) **POSITIONING OF A COVERING IN A MOULD**
POSITIONIERUNG EINES BEZUGS IN EINEM FORMWERKZEUG
POSITIONNEMENT D'UN REVETEMENT DANS UN MOULE

(30) Priority: 27.01.2001 GB 0102201
(43) Date of publication of application: 12.11.2003
(73) Proprietor: Intier Automotive Interiors Limited, Maidstone, Kent ME15 9XT (GB)
(72) Inventor: SIDDALL, Nick, Intier Automotive Interiors Ltd., Tachbrook Park, Warwick CV34 6RW (GB)
(74) Representative: Lockey, Robert Alexander
(86) International application number: PCT/GB2002/000319
(87) International publication number: WO 2002/058906

(56) References cited:
- EP-A- 0 638 405
- DE-C- 3 634 297
- DE-C- 3 743 318
- GB-A- 2 175 242
- US-A- 5 231 745

## Description

### Description of Invention

This invention relates to a method according to the preamble of claim 1 for making a foamed component comprising a covering, particularly but not exclusively a vehicle interior component.

Such a method is known eg from GB-A-2 175 242.

When manufacturing components for vehicle interiors, a common processing technique referred to as "foam in place" is used, wherein a covering comprising a plastic moulded skin is placed in a foaming tool. A rigid armature is held spaced from the skin by the foaming tool and polyurethane foam is injected between the covering and the armature to provide a component with a soft feel foam interlayer supported by the armature. When manufacturing such a component, positioning of the moulded skin in the foaming tool is simple since the skin is formed in the shape of the final part and the foaming tool is appropriately shaped to receive the skin.

The use of leather or materials having the appearance of leather is becoming more common in vehicles. It is desirable to manufacture interior components with a covering of leather or material having the appearance of leather using the foam in place method. However, location of the covering in the mould is less simple than for a plastic moulded skin. This is particularly the case where the covering has a stitch line which should be aligned with a particular part of the component. Loading such a covering and aligning the stitch line requires a great deal of skill on the part of the operator to correctly align the stitch line. If the alignment of the stitch line is incorrect the part will be visually unacceptable, but since the likelihood of success is dependant on tool complexity and operator skill, an acceptable part is not guaranteed. It is also difficult to meet tight specifications on stitch line positioning tolerance.

An aim of the invention is to reduce or overcome one or more of the above problems.

Accordingly, the present invention provides a method as defined in claim 1.

The method may comprise the step, when the covering is placed on the positioning tool, of holding the covering in position adjacent the positioning tool by means of a first holding means.

The method may comprise the step, after inserting the positioning tool in the mould, of releasing the first holding means to release the covering from the positioning tool, and operating a second holding means to hold the covering in position in said mould.

The method may comprise the step of disposing an armature in the mould prior to closing the mould.

The covering may comprise a first part and a second part each having an outer surface, an edge part of each of the said first part and said second part being disposed adjacent one another such that the outer surfaces are in abutment and such that stitches pass through said edge part to form the stitch line.

The stitch line may further comprise a tape element extending along said stitch line on the reverse side of the covering, the tape element being attached to the first part and/or the second part either side of the stitch line.

The projecting part may comprise a profile held in place by said tape element.

The stitch line may be resistant to passage of foam.

The invention will now be described by way of example only with reference to the accompanying drawings, wherein;
Figure 1 is a perspective view of a positioning tool and covering,
Figure 2a is a perspective view of part of the positioning tool of Figure 1,
Figure 2b is a section on line 2b-2b of Figure 2a where the positioning tool is provided with a covering,
Figure 3 is a perspective view of a foaming tool,
Figure 4 is a section on line 4-4 of Figure 3 further provided with a positioning tool of Figure 1.
Figure 5a is a perspective view of the stitch line of the covering useful in the present invention,
Figure 5b is a section on line 5-5 of Figure 5a,
Figure 6a is a perspective view of an alternative stitch line useful in the present invention, and
Figure 6b is a section on line 6-6 of Figure 6a.

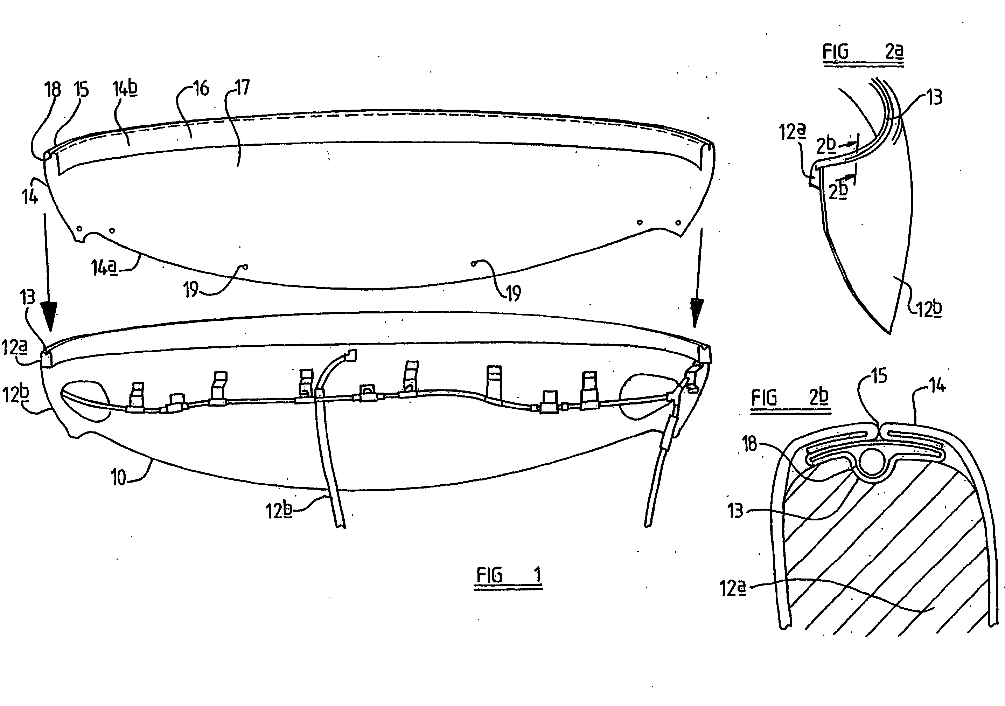

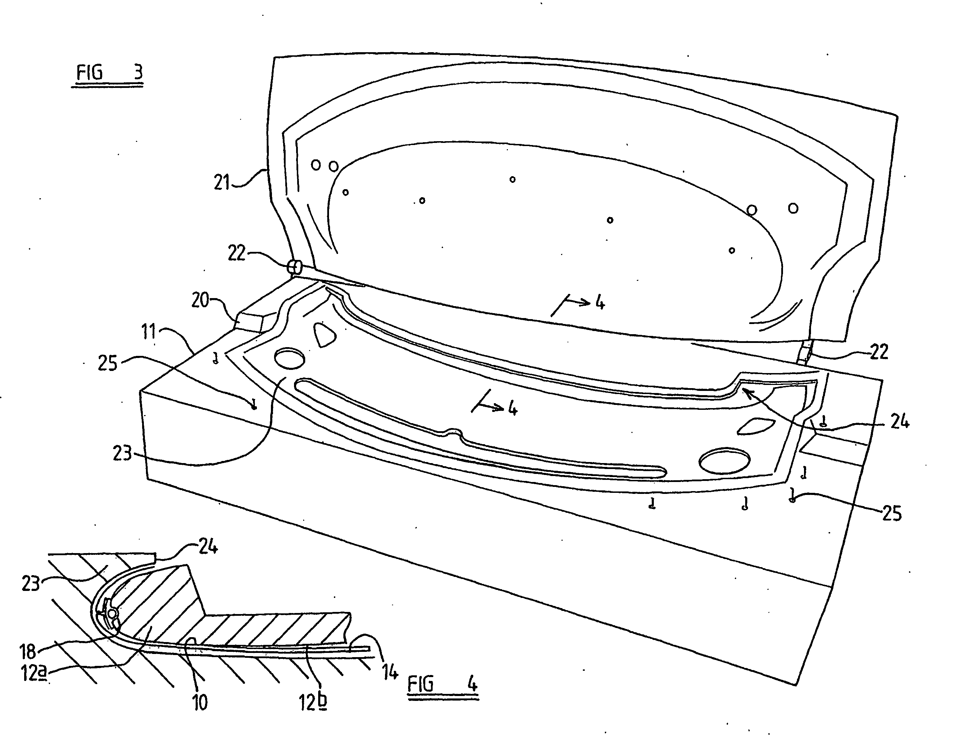

Referring now to Figures 1-4, a positioning tool is shown at 10, for use with a foaming tool generally indicated at 11 in Figure 3. The positioning tool 10 comprises support means having a head part 12a and a surface part 12b, the surface part 12b being provided with first holding means 12c in the form of a vacuum source extending to apertures on the surface of the surface part 12b. The head part 12a along an edge thereof is provided with a recess 13, in the present example a groove extending along the length of the head part 12a. The positioning tool 10 is adapted to receive and support a covering 14 for location in the mould 11.

In the present example, the covering 14 comprises a first part 14a and a second part 14b, the first part 14a and second part 14b being joined along a stitch line 15. The stitch line 15 may be formed in any suitable manner as described, and particularly as described hereinafter. The covering 14 has an outer surface 16, which will be visible on the completed component, and an inner, or reverse, surface 17 which faces inwardly of the completed component. The covering 14 is mounted on the positioning tool 10 such that a projecting part 18 formed by the stitch line 15 is snugly received in the recess 13. The first part 14a of the covering 14 is disposed with the inner surface 17 adjacent the surface part 12b, such that when the first holding means 12c is operated, the covering 14 is held adjacent the surface part 12b. The covering 14 is further provided with a plurality of locating apertures 19 disposed towards the periphery thereof.

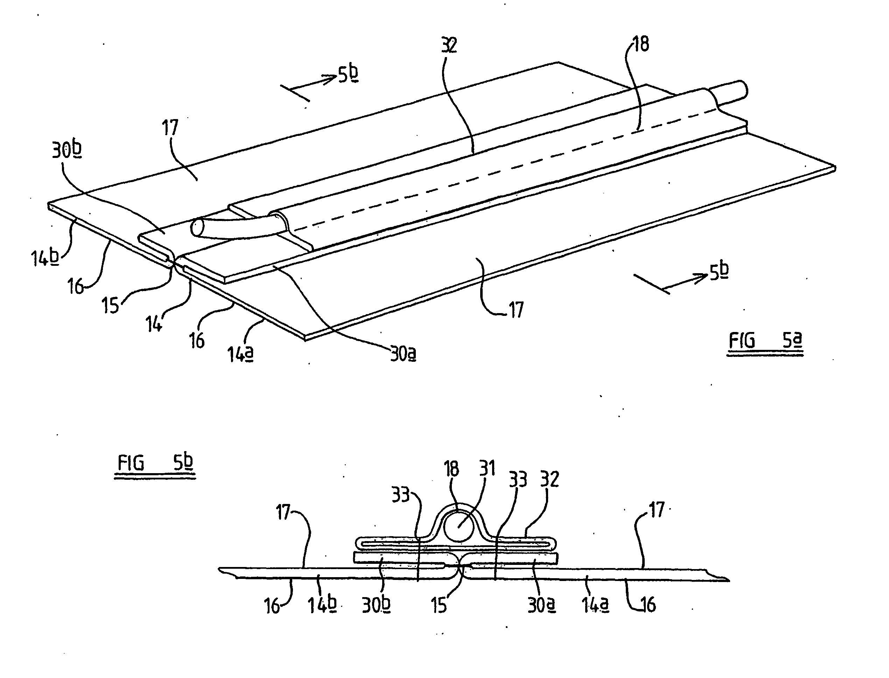

As shown in Figures 3 and 4, the foaming tool 11 comprises a lower mould part 20 and an upper mould part 21. In the present example, the upper mould part 21 is pivotally connected to the lower mould part 20 by hinges generally indicated at 22. A foam supply means (not shown) to supply foam to the foaming tool is provided. The lower mould part 20 is provided with a lower mould surface 23 in the shape of the outer surface of the desired component. In the particular example, the desired component forms part of a dashboard assembly for the interior of a vehicle. The lower mould surface 23 is provided with an undercut 24. As seen in Figure 4, the head part 12a of the positioning tool 10 is shaped to conform to the shape of and be received within the undercut 24 of the lower mould surface 23, with allowances for the thickness of the covering 14. The lower mould surface 23 is provided with second holding means (not shown), for example vacuum means, to hold the covering 14 in place adjacent to the lower mould surface 23. The lower mould part 20 is further provided with a plurality of location pins 25 located around the periphery of the lower mould surface 23, the location pins 25 being adapted to engage the location holes 19 on the covering 14. The upper mould part 21 is provided with holding means (not shown) to support an armature at an appropriate spacing from the lower mould surface 23.

The support positioning tool 10 in the present example conforms to the shape of the lower mould surface 23 only in the vicinity of the recess 13, that is only the head part 12a is so shaped, to permit easy introduction and withdrawal of the positioning tool 10. It will be apparent that, where appropriate, the head part 12a may be provided without a recess 13, but the shape of the head part 12a will similarly advantageously permit easy location and withdrawal of the positioning tool 10.

To manufacture a component, an operator first places a covering 14 having a projecting part 18 onto the positioning tool 10 such that the projecting part 18 is received in the recess 13. By actuation of the holding means 12c, the covering 14 is held adjacent the positing tool 10 in the correct position. The operator then positions the positioning tool 10 in the lower mould part 21, such that the head part 12a of the positioning tool is received in the undercut 24. The operator locates the locating pins 25 in the corresponding locating holes 19 in the covering 14. If the holes and pins are not correctly aligned, this indicates that either the covering 14 or tool 10 is not correctly positioned, and then it will then be apparent to the operator that the tool 10 or the covering 14 needs to be repositioned.

Once the covering 14 and tool 10 are correctly positioned, the holding means of the lower mould part 21 are activated to hold the covering 14 in position adjacent the lower mould surface 23. The holding means 12c may then be deactivated, for example by releasing the vacuum, to release the covering 14 from the positioning tool 10. The positioning tool 10 may then be withdrawn from the lower mould part 21. The engagement of the pins 25 and holes 19 also helps to keep the covering 14 in place while the positioning tool 10 is withdrawn. The covering 14 is held in place with the outer surface 16 facing downwardly, adjacent the lower mould surface 23, and with the inner surface 17 facing upwardly.

In the present example, the geometry of the head part 12a of the positioning tool 10 and of the undercut 24 is such that the tool may be withdrawn from the mould without difficulty. When the geometry of the positioning tool 10 and/or lower mould part 21 is such that this may not be easily accomplished, the positioning tool 10 may be collapsible to permit easy removal of the tool 10 once the covering 14 has been positioned.

The effect of performing this method is that the stitch line 15 is correctly positioned relative to the lower mould part 23. The stitch line 15 can thus be repeatedly and easily located in the correct position without demanding a great deal of skill from the operator.

If the component is to comprise an armature, the armature is located on the upper mould part 21. A foaming material is dispersed directly on top of the covering 14 by the foam supply means. The tool 11 is then closed, by pivoting the upper part 21 of the mould about hinges 22 down to a closed position. The foaming tool 11 applies a desired pressure while the foaming material sets. Alternatively, the foaming tool 11 may be closed prior to introducing the foaming material, and foaming material introduced via the foam supply means. Where a armature is provided, the foaming material is introduced between the covering and armature. When the foaming material has set, the component, now comprising a covering 14 bonded to an armature by a layer of foam material, may be withdrawn from the tool 11 and the process repeated.

If desired, further positioning means such as hinge or dowels may be provided to locate the positioning tool 10 relative to the lower mould part 23. Alternatively, where the geometry of the lower mould part 23 and positioning tool 10 are such that the positioning tool 10 can only be located in one position the lower mould part 23, then the dowels or other means may be omitted.

The method and apparatus are intended to be used with leather or material having the appearance of leather such as leatherette, although other material where suitable may be used as desired.

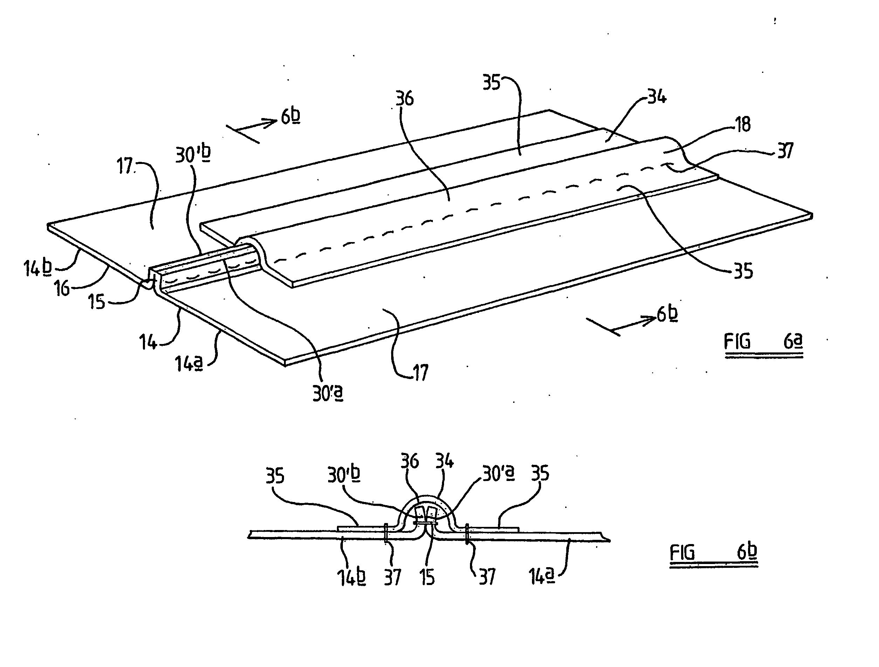

For the covering 14 to be correctly located on the positioning tool 10, it is of course necessary that the projecting part 18 of the stitch line 15 be of a suitable size and shape to be correctly received within the recess 13. Examples of two such projecting parts are shown in Figures 5a, 5b, 6a, 6b.

In the first example, as shown is Figures 5a, and 5b, the two parts 14a, 14b, of the covering 14 are joined at a stitch line 15. The first part 14a and second part 14b are joined together along the stitch line 15 such that the selvage 30a, 30b of each part, i.e. that edge part of the material extending beyond the stitch line 15, will be disposed within the final component out of view, adjacent to the inner surface 17. Disposed above the stitch line 15 and running parallel thereto is a profile, in the present example comprising a length of piping 31. The profile may alternatively comprise rope, or wire, or may be other material as appropriate or desired. The length of piping 31 is held in place by a tape envelope 32 which extends alongside the stitch line 15. The piping 31 is disposed within a generally central part of the envelope 32. The envelope 32 is then held in place by stitch lines 33 extending either side of the piping 31 and passing through the envelope 32 and at least one of the first part 14a and second part 14b as appropriate. Hence, a projecting part 18 is formed on the inner, or reverse, surface 17 of the covering 14 which may be received in the recess 13.

In an alternative configuration, where the material of the covering 14 is sufficiently thick, the piping may be omitted as shown in Figures 6a and 6b. In this example, the parts 14a and 14b are likewise joined by a stitch line, but instead of being folded back to lie alongside the parts 14a, 14b, the selvage 30'a, 30'b, as seen in Figures 6b extends generally transverse to the part 14a, 14b. A tape part 34 is disposed on the inner surface 17 of the part 14, a side part 35 of the tape 34 disposed each side of the stitch line 15 and lying adjacent to the part 14a, 14b, with a central part 36 of the tape 34 extending over the stitch line 15. The tape 34 is then held in place by stitch lines 37 passing through at least one of the first part 14a and second part 14b either side of the stitch line 15.

In addition to providing a projecting part 18, a stitch line 15 as described hereinbefore has the further advantage that when the covering 14 is located in the foaming tool 11 and foam is supplied to the mould, the stitch line 15, and in particular the tape element 34, resists the passage of foam through the stitch line 15.

It will be apparent that the feature 18 may be formed by any means as desired. It will also be apparent that the method and apparatus may be used to manufacture any appropriate component as desired and may be applied to location of a covering in a mould for any application of purpose as necessary.

In the present specification "comprise" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof, without departing from the scope defined in the appended claims.

## Claims

1. A method of making a component comprising the steps of providing a covering (14), having an outer surface (16) and an inner, reverse surface (17) the covering (14) comprising a projecting part (18), placing said covering (14) on a positioning tool (10), locating said covering in a mould (11) using said positioning tool (10), removing the positioning tool (10) from the mould (11) leaving the covering (14) in place in the mould (11), closing the mould (11), and supplying foam to the mould (11), **characterised in that** the method comprises the steps of providing a covering (14) with a stitch line (15) on the reverse surface of the covering (14) to provide the projecting part (18) and locating the projecting part (18) in a groove of said positioning tool (10).

2. A method according to claim 1 comprising the step, when the covering (14) is placed on the positioning tool, of holding the covering (14) in position adjacent the positioning tool by means of a first holding means.

3. A method according to claim 2 comprising the step, after inserting the positioning tool in the mould (11), of releasing the first holding means to release the covering (14) from the positioning tool, and operating a second holding means to hold the covering (14) in position in said mould (11).

4. A method according to any one of claims 1 to 3 comprising the step of disposing an armature in the mould (11) prior to closing the mould (11).

5. A method according to any one of the preceding claims wherein the mould (11) has a first mould part (20) and a second mould part (21), the second mould part (21) being movable relative to the first mould part (20), wherein the positioning tool (10) is shaped to co-operate with said at least one mould part.

6. A method according to claim 5 wherein the positioning tool (10) is shaped co-operate with said at least one mould part only in the vicinity of the groove (13).

7. A method according to claim 5 or claim 6 wherein the positioning tool (10) comprises a head part (12a) and a surface part (12b) extending away from said head part (12a) and wherein the groove (13) is provided on the head part (12a).

8. A method according to any one of the preceding claims comprising providing the covering (14) having a first part (14a) and a second part (14b) each having an outer surface, an edge part (30a, 30b) of each of the said first part and said second part being disposed adjacent one another such that the outer surfaces are in abutment and such that stitches pass through said edge part to form the stitch line (15).

9. A method according to claim 8 wherein the projecting part (18) further comprises a tape element (34) extending along said stitch line on the reverse side of the covering, the tape element (34) being attached to the first part (14a) and/or the second part (14b) either side of the stitch line (15).

10. A method according to claim 9 wherein the projecting part comprises a profile (31) held in place by said tape element (34).

11. A method according to claim 9 or claim 10 wherein the stitch line (15) is resistant to passage of foam.

## Patentansprüche

1. Verfahren zum Herstellen eines Bauteils, bei dem eine eine Außenseite (16), eine innere Rückseite (17) und einen vorstehenden Teil (18) aufweisende Umhüllung (14) auf einem Positionierwerkzeug (10) angeordnet wird, die Umhüllung ( 14) unter Verwendung des Positionierwerkzeuges (10) in einer Form (11) angeordnet wird, das Positionierwerkzeug (10) unter Belassen der in der Form (11) positionierten Umhüllung (14) aus der Form (11) entfernt wird, die Form (10) geschlossen wird, und der Form (10) Schaum zugeführt wird, **dadurch gekennzeichnet, daß** eine Umhüllung (14) mit einer auf ihrer Rückseite vorhandenen Naht (15) vorgesehen wird, um den vorstehenden Teil (18) zu bilden; und daß der vorstehende Teil (18) in einer nutförmigen Ausnehmung des Positionierwerkzeuges (10) angeordnet wird.

2. Verfahrcn nach Anspruch 1, **dadurch gekennzeichnet, daß** die Umhüllung (14) durch ein erstes Haltemittel benachbart zu dem Positionierwerkzeug in Position gehalten wird, wenn sie auf dem Positionierwerkzeug angeordnet ist.

3. Verfahren nach Anspruch 2, **dadurch gekennzeichnet, daß** nach dem Einrühren des Positionierwerkzeuges in die Form (11) das erste Haltemittel gelöst wird, um die Umhüllung (14) von dem Positionierwerkzeug (10) freizugeben, und daß ein zweites Haltemittel betätigt wird, um die Umhüllung (14) in der Form (11) in Position zu halten.

4. Verfahren nach einem der Ansprüche 1 bis 3, **dadurch gekennzeichnet, daß** vor dem Schließen der Form (11) eine Armatur in der Form (11) angeordnet wird.

5. Verfahren nach einem der vorhergehenden Ansprüche, **dadurch gekennzeichnet, daß** die Form (11) ein erstes Formteil (20) und ein zweites Formteil (21) aufweist, wobei das zweite Formteil (21) relativ zu dem ersten Formteil (20) beweglich ist, und wobei das Positionierwerkzeug (10) so geformt ist, daß es mit wenigstens einem Formteil zusammenwirkt.

6. Verfahren nach Anspruch 5, **dadurch gekennzeichnet, daß** das Positionierwerkzeug (10) so geformt ist, daß es mit wenigstens einem Formteil nur in der Nähe der nutförmigen Ausnehmung (13) zusammenwirkt.

7. Verfahren nach Anspruch 5 oder 6, **dadurch gekennzeichnet, daß** das Positionierwerkzeug (10) ein Kopfteil (12a) und ein Flächenteil (12b) aufweist, welches sich von dem Kopfteil (12a) wegerstreckt, und daß die nutförmige Ausnehrnung (13) in dem Kopfteil (12a) angeordnet ist.

8. Verfahren nach einem der vorhergehenden Ansprüche, **dadurch gekennzeichnet, daß** eine Umhüllung (14) vorgesehen wird, die ein erstes Teil (14a) und ein zweites Teil (14b) aufweist, die jeweils eine Außenseite aufweisen, wobei ein Kantenteil (30a, 30b) jedes der ersten und zweiten Teile so einander benachbart angeordnet sind, daß die Außenseiten aneinander anliegen, und daß die Stiche durch den Kantenteil verlaufen, um die Naht (15) zu bilden.

9. Verfahren nach Anspruch 8, **dadurch gekennzeichnet, daß** der vorstehende Teil (18) außerdem ein Bandelement (34) aufweist, welches sich auf der Rückseite der Umhüllung entlang der Naht erstreckt, wobei das Bandelement (34) mit dem ersten Teil (14a) und/oder dem zweiten Teil (14b) auf jeder Seite der Naht (15) verbunden ist.

10. Verfahren nach Anspruch 9, **dadurch gekennzeichnet, daß** der vorstehende Teil ein Profil (31) aufweist, welches durch das Bandelement (34) an Ort und Stelle gehalten wird.

11. Verfahren nach Anspruch 9 oder 10, **dadurch gekennzeichnet, daß** die Naht (15) schaumundurchlässig ist.

## Revendications

1. Procédé de fabrication d'un composant comprenant les étapes consistant à proposer un habillage (14), ayant une surface externe (16) et une surface interne ou revers (17), l'habillage (14) comprenant une partie faisant saillie (18), à positionner ledit habillage (14) sur un outil de positionnement (10), à positionner ledit habillage à l'intérieur d'un moule (11) en utilisant ledit outil de positionnement (10), à retirer l'outil de positionnement (10) du moule (11) en laissant l'habillage (14) en position dans le moule (11), à fermer le moule (11), et à alimenter le moule (11) en mousse, **caractérisé en ce que** le procédé comprend les étapes consistant à fournir un habillage (14) pourvu d'une ligne de couture (15) sur le revers de l'habillage (14) afin de présenter une partie faisant saillie (18) et à positionner la partie faisant saillie(18) dans une rainure dudit outil de positionnement (10).

2. Procédé selon la revendication 1 comprenant l'étape consistant à maintenir l'habillage (14) dans une position adjacente à l'outil de positionnement par le biais de premiers moyens de retenue lorsque l'habillage est placé sur l'outil de positionnement.

3. Procédé selon la revendication 2 comprenant l'étape consistant à dégager les premiers moyens de retenue afin de dégager l'habillage (14) de l'outil de positionnement et à actionner les deuxièmes moyens de. retenue afin de maintenir l'habillage (14) en position dans ledit moule (11) après avoir inséré l'outil de positionnement dans le moule (11).

4. Procédé selon l'une quelconque des revendications 1 à 3, comprenant l'étape consistant à disposer une armature dans le moule (11) avant de fermer celui-ci.

5. Procédé selon l'une quelconque des revendications précédentes dans lequel le moule (11) présente une première partie de moule (20) et une deuxième partie de moule (21), la deuxième partie de moule (21) pouvant être déplacée par rapport à la première partie de moule (20), dans lequel l'outil de positionnement (10) est formé pour s'adapter à ladite au moins une partie de moule.

6. Procédé selon la revendication 5, dans lequel l'outil de positionnement (10) est formé pour s'adapter avec ladite au moins une partie du moule uniquement à proximité de la rainure (13).

7. Procédé selon la revendication 5 ou la revendication 6 dans lequel l'outil de positionnement (10) comprend une partie de tête (12a) et une surface (12b) s'éloignant de ladite partie de tête (12a) et dans lequel la rainure (13) est située sur la partie de tête (12a).

8. Procédé selon l'une quelconque des revendications précédentes, comprenant l'étape consistant à fournir un habillage (14) qui présente une première partie (14a) et une deuxième partie (14b) présentant chacune une surface externe, une partie de bord (30a, 30b) de chacune desdites première et deuxième parties étant disposée de façon adjacente à l'autre de telle sorte que les surfaces externes soient juxtaposées et que les coutures traversent lesdites parties de bord pour former la ligne de couture (15).

9. Procédé selon la revendication 8, dans lequel la partie faisant saillie (18) comprend en outre un composant de ruban (34) s'étendant le long de ladite ligne de couture (15) sur le revers de l'habillage, le composant de ruban (34) étant fixé à la première partie (14a) et/ou à la deuxième partie (14b) de chaque côté de la ligne de couture (15).

10. Procédé selon la revendication 9 dans lequel la partie faisant saillie comprend un profil (31) maintenu en position grâce au dit composant de ruban (34).

11. Procédé selon la revendication 9 ou 10 dans lequel la. ligne de couture (15) est résistante au passage de la mousse.
